# EUROPEAN PATENT SPECIFICATION

(11) **EP 2 184 501 B1**
(45) Date of publication and mention of the grant of the patent: **02.05.2012**
(21) Application number: 09013953.6
(22) Date of filing: 06.11.2009
(51) Int. Cl.: F16C 1/14, F16C 1/22

(54) **Core adjuster having a pivoting cover with an integrated lock**
Kerneinstellungsvorrichtung mit einer drehbaren Abdeckung mit integrierter Sperre
Régleur de noyau doté d'un couvercle pivotant avec un verrou intégré

(30) Priority: 07.11.2008 US 112501 P
(43) Date of publication of application: 12.05.2010
(73) Proprietor: Kongsberg Automotive AB, 56528 Mullsjö (SE)
(72) Inventor: Grönhage, Anders, 56435 Bankeryd (SE); Theander, Adam, 56491 Bankeryd (SE)
(74) Representative: UEXKÜLL & STOLBERG

(56) References cited:
- EP-A- 1 967 746
- DE-A1- 19 730 683
- US-A- 5 570 612
- US-A- 5 673 596
- US-A1- 2006 230 868

## Description

### FIELD OF THE INVENTION

The invention generally relates to a core adjuster for retaining a cable, comprising: an adjuster housing member with a cavity for receiving an end section of the cable, a locking element and a pivotal cover pivotably connected to the housing member and capable of pivoting between an open and a locked position in engagement with the adjuster housing member, the locking element being configured to be in securing contact with the end of the cable in the cavity when the pivotal cover is in the locked position to secure the cable therein.

Such a core adjuster is for example known from DE 197 30 683 A1. The locking element is a separate component which is movable within the cavity and which is pressed by the pivotal cover, when the latter is moved towards the locked position, to engage the end section of the cable received within the cavity to thereby secure the cable therein. A spring is provided exerting a biasing force urging the locking element away from the engaging contact with the end section of the cable once the pivotal cover is opened. At least four separate components (adjuster housing member, pivotal cover, locking element and spring) are needed for this adjuster which makes manufacturing more difficult and cost intensive.

It is an object of the present invention to provide a core adjuster of simpler and more robust design which is easier to manufacture and to operate.

This object is solved by the characterising feature of claim 1 in connection with its preamble. Preferred embodiments are set out in the dependent claims.

By forming the locking element as an integral part of the pivotal cover several advantages are achieved. Since in this manner only two separate parts are needed for the core adjuster as compared to four parts in the prior art, assembly time and costs are reduced. Furthermore, the risk that the locking element could be inserted in a wrong orientation during assembly is eliminated. In addition, the risk of loosing any part during assembly or service of the adjuster is reduced.

### BRIEF DESCRIPTION OF THE DRAWINGS

Other advantages of the present invention will be readily appreciated as the same becomes better understood by reference to the following detailed description when considered in connection with the accompanying drawings.

Figure 1 is an exploded perspective view of the core adjuster and pivotal cover.

Figure 2 is an exploded perspective view of a prior art core adjuster.

Figure 3 is a perspective view of the core adjuster with the pivotal cover in an open position.

Figure 4 is an other perspective view of the core adjuster with the pivotal cover in a locked position.

Figure 5 is an end view of the core adjuster with the pivotal cover in the open position.

Figure 6 is another end view of the core adjuster with the pivotal cover in the locked position.

Figure 7 is an underside perspective view of the pivotal cover having a locking element integral with the cover.

Figure 8 is an other underside perspective view of the pivotal cover and locking element.

Figure 9 is a perspective view of the prior art pivotal cover.

Figure 10 is a side view of the core adjuster with the pivotal cover in the locked position.

Figure 11 is a perspective view of the pivotal cover having a lever.

Figure 12 is a side view of the prior art core adjuster.

Figure 13 is a perspective view of the prior art pivotal cover.

Figure 14 is a side view of the core adjuster with the pivotal cover in the open position.

### DETAILED DESCRIPTION OF THE EXEMPLARY EMBODIMENT

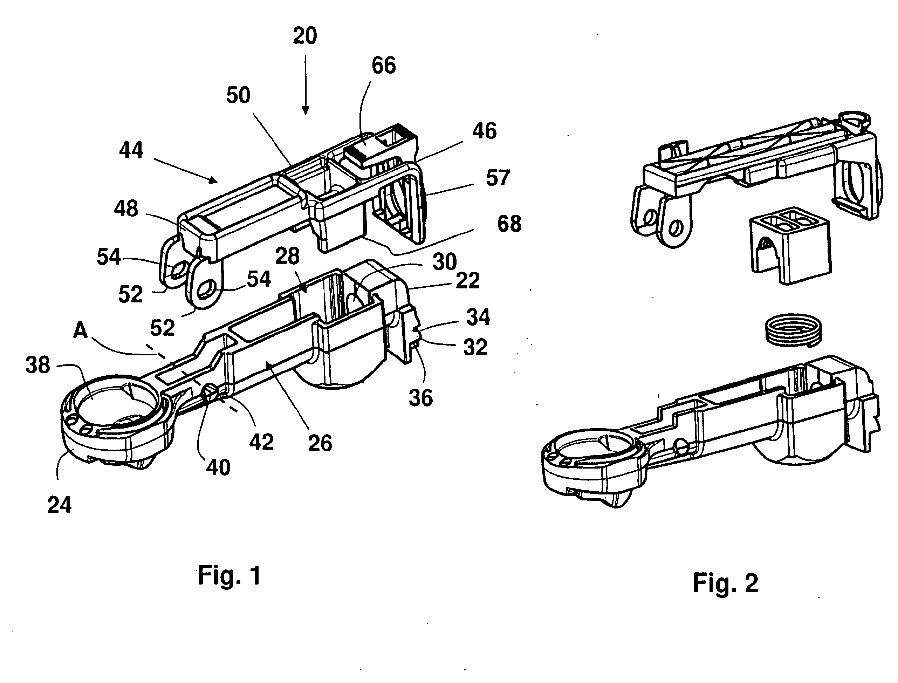

Referring to Figures 1, 3-8 and 10-11, a core adjuster 20 in accordance with the subject invention for retaining an end of a cable (not shown) within a vehicle (not shown) is shown. A prior art core adjuster is shown in Figures 2, 9 and 13.

The core adjuster 20 of the subject invention comprises a plastic material capable of injection molding to allow for integrally forming the core adjuster 20. However, it is to be appreciated that the core adjuster 20 may comprise any suitable material. Referring to Figure 1, the core adjuster 20 has a first end 22 and a second end 24 spaced from each other with a body portion 26 disposed therebetween which together form a adjuster housing member. The body portion 26 defines a cavity 28 for receiving the end of the cable. Typically, the end of the cable will include a fitting having a series of teeth. The first end 22 of the core adjuster 20 defines a first bore 30 there through for allowing the fitting and the cable to pass through the first end 22 of the core adjuster 20 and enter the cavity 28.

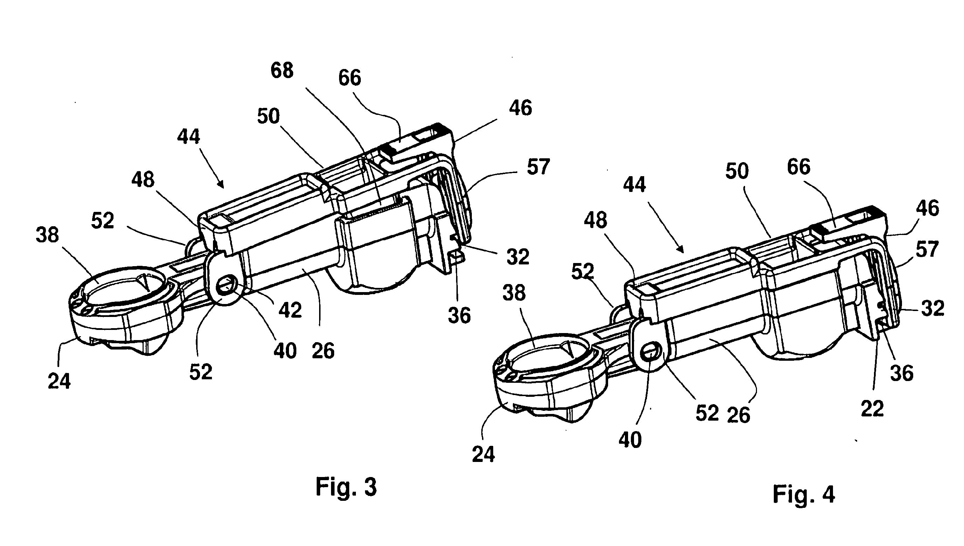

The cable is inserted in direction of the arrow in Figure 3 through the first bore into the cavity 28.

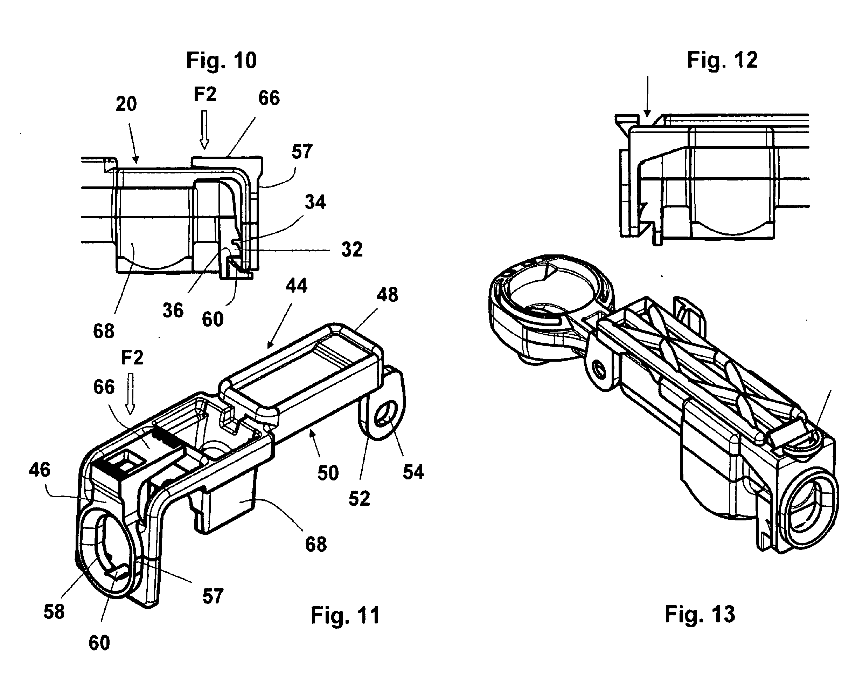

Referring to Figures 1 and 10, the first end 22 of the core adjuster 20 also has at least one first finger 32 disposed adjacent to the first bore 30. Typically, the first finger 32 of the core adjuster 20 has a general wedge configuration with the first finger 32 having a first ramp portion 34 adjacent to the first bore 30 and a first flat portion 36 spaced from the first ramp portion 34 and substantially perpendicular to the first end 22 of the core adjuster 20. It is to be appreciated that the first finger 32 may include only the first flat portion 36 without departing from the scope of the subject invention. Referring back to Figure 1, the second end 24 of the core adjuster 20 defines an aperture 38 for receiving a fastener (not shown) to secure the core adjuster 20 to the vehicle.

The body portion 26 of the core adjuster 20 also has a pair of opposing tabs 40 extending from the body portion 26 of the core adjuster 20. Typically, the tabs 40 have a cylindrical configuration. Each of the tabs 40 may have a tapered surface 42. The tabs 40 define a pivotal axis A extending through each of the tabs 40.

Referring to Figures 1 and 3, the core adjuster 20 also includes a pivotal cover 44 having a first end 46 and a second end 48 with a body portion 50 disposed therebetween. The pivotal cover 44 comprises a plastic material capable of injection molding to allow for integrally forming the pivotal cover 44. However, it is to be appreciated that the pivotal cover 44 may comprise any suitable material. Generally, the pivotal cover 44 is coupled to the core adjuster 20 such that the pivotal cover 44 can pivot about the pivotal axis A.

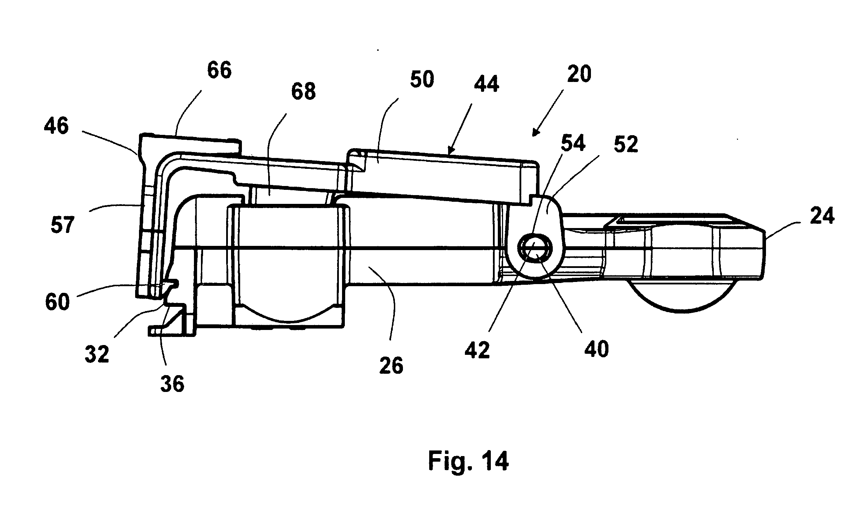

The pivotal cover 44 has a pair of ears 52 extending from the second end 48 of the pivotal cover 44 with each of the ears 52 defining a hole 54. Each of the ears 52 has a tapered surface 56 adjacent to the holes 54 of the ears 52. The pivotal cover 44 is coupled to the core adjuster 20 by aligning the tapered surface 56 of the ears 52 with the tapered surface 42 of the tabs 40 such that the tapered surfaces 42, 56 contact each other and then pressing the pivotal cover 44 toward the core adjuster 20. The pressing of the pivotal cover 44 toward the core adjuster 20 in cooperation with the tapered surfaces 42, 56 force the ears 52 of the pivotal cover 44 to flex for allowing the holes 54 of the ears 52 of the pivotal cover 44 to align with the tabs 40 of the core adjuster 20. Once the holes 54 of the ears 52 of the pivotal cover 44 align with the tabs 40 of the core adjuster 20 the ears 52 unflex for disposing the tabs 40 of the core adjuster 20 within the holes 54 of the ears 52 of the pivotal cover 44. As shown in Figure 14, preferably the holes 54 of the ears 52 are elongated to define gaps between the tabs 40 and the holes 54 of the ears 52. Even more preferably, the holes 54 are elongated in the axial direction of the cable. During operation of the cable, axial forces are transmitted to the pivotal cover 44. The gaps allow movement of the pivotal cover 44 relative to the tabs 40 in the axial direction of the cable to minimize the transfer of axial forces to the ears 52 and the tabs 40.

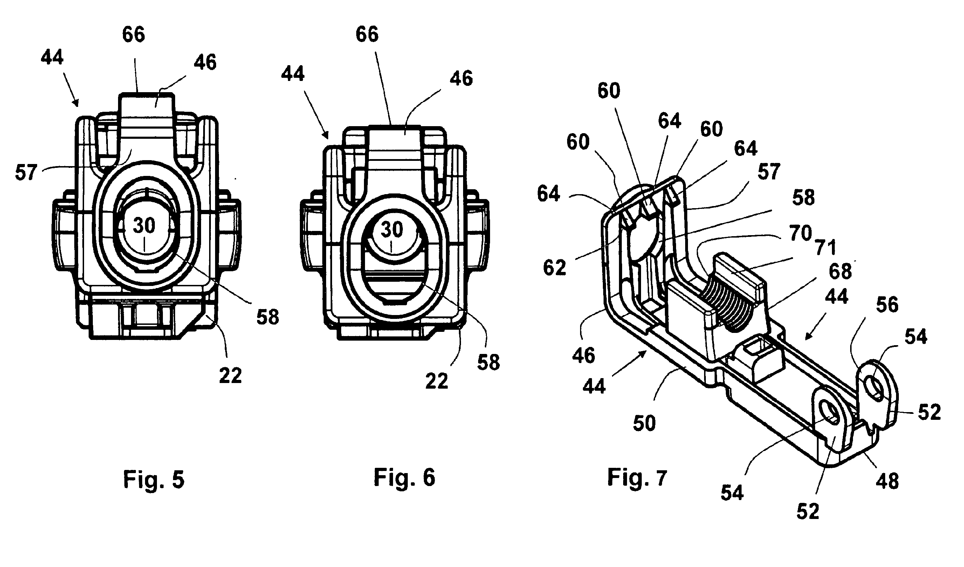

The pivotal cover 44 also has an end cap 57 extending from the first end 46 of the pivotal cover 44. The end cap 57 defines a second bore 58 for allowing the cable to pass through the end cap 57. It is to be appreciated that the second bore 58 of the end cap 57 may be any suitable configuration such as, for example a circle, a square, or an ellipse without departing from the scope of the subject invention. Typically, the second bore 58 is larger than the first bore 30 of the core adjuster 20 as shown in Figures 5 and 6.

Referring to Figures 1 and 10, the end cap 57 also defines at lease one second finger 60 for engaging the first finger 32 of the core adjuster 20. Typically, the second finger 60 has a general wedge configuration with the second finger 60 having a second flat portion 62 adjacent to the second bore 58 and a second ramp portion 64 spaced from the second flat portion 62. It is to be appreciated that the second finger 60 may include only the second flat portion 62 without departing from the scope of the subject invention. It if further to be appreciated that the first finger 32 and the second finger 60 may have any configuration so long as the fingers 32, 60 engage each other. It is preferred that vertically above the first finger 32 a recess is formed, as can be seen from Figure 14, which may receive the second finger 60 in an intermediate, unlocked position of the pivotal cover 44 to hold the pivotal cover in this position in which the cable may be inserted and shifted to adjust ist length.

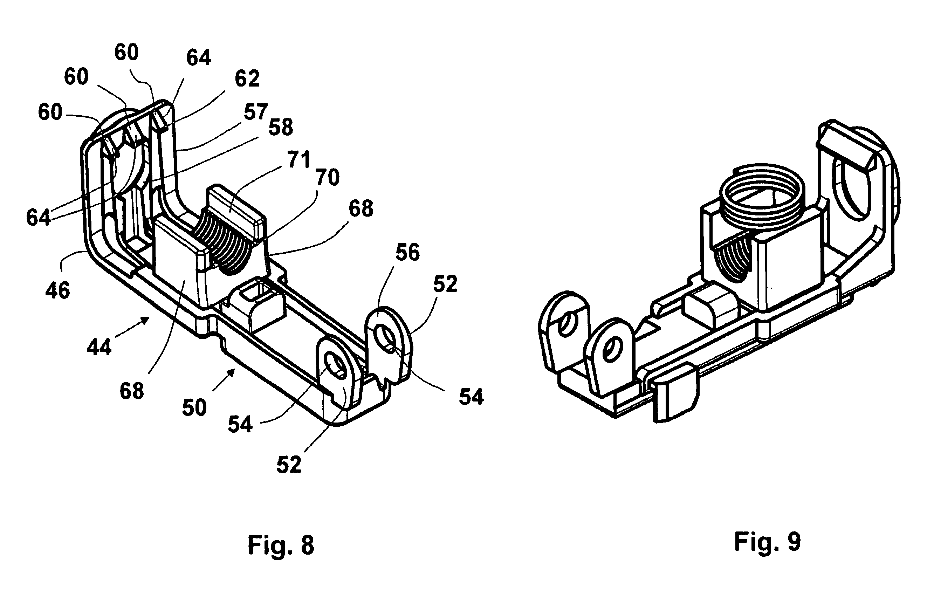

The end cap 57 is elastically connected to the remaining part of the pivotal cover 44. Preferably, as can for example be seen from Figure 8, the end cap 57 is connected to the remaining part of the pivotal cover 44 by two strip-shaped portions of material which are spaced apart and leave an opening inbetween. In this manner the amount of material that needs to be deformed for elastically bending the end cap 57 with respect to their remaining part of the pivotal cover 44 is strongly reduced, namely to the material contained in the strip-shaped portions. In addition, as can be seen from Figure 8, lever 66 is connected to the front end portion of the pivotal cover and merging into the end cap 57. By pressing on the end of the lever 66 remote from the end cap 57, the end cap 57 may be bent away to thereby disengage the first and second fingers 32, 60 to move the pivotal cover 44 out of the locked position. In addition, as may be seen from Figure 14, the lever 66 may have a forwardly projecting end portion 46 that extends in axial direction beyond the end cap 57 and the first and second fingers 32, 60. By exerting force on this axially extending front end portion it is possible to exert a torque on the end cap 57 to press the end cap 57 into the locked position with engaging first and second fingers 32, 60.

Referring to Figures 3 and 4, the pivotal cover 44 has an open position and a locked position such that the fingers 32, 60 are separated from each other when the pivotal cover 44 is in the open position and the fingers 32, 60 engage each other when the cover is in the locked position. The pivotal cover 44 pivots between the open and the locked positions about the pivotal axis A shown in Figure 1. The cable is locked in position by pressing down the cover with a force indicated as F₁ which brings the second finger of the end cap 57 into locking engagement behind the first finger 32 on the front end of the adjuster housing member. As shown in Figures 5 and 6, the second bore 58 is configured to allow the pivotal cover 44 to move between the open and the locked positions without the movement being restricted by the cable disposed through the first and second bores 30, 58. A first force F1 is applied to the first end 46 of the pivotal cover 44 for moving the pivotal cover 44 from the open position to the locked position such that the second ramp portion 64 of the second finger 60 slides along the first ramp portion 34 of the first finger 32 to engage the fingers 32, 60 with each other. Referring to Figure 10, the engagement of the fingers 32, 60 prevents the pivotal cover 44 from moving out of the locked position.

The pivotal cover 44 further has a locking element 68 extending from the body 50 of the pivotal cover 44 configured to be disposed within the cavity 28 of the core adjuster 20. The locking element 68 is integrally formed with the pivotal cover 44 to operate as a homogeneous unit. As such, as the pivotal cover 44 moves between the open and locked positions, the locking element 68 will correspondingly move within the cavity 28. The locking element 68 is configured to contact the fitting of the cable to secure the end of the cable within the core adjuster 20 when the pivotal cover 44 is in the locked position. The locking element 68 also allows the cable to be adjusted within the cavity 28 of the core adjuster 20 when the pivotal cover 44 is in the open position. Referring to Figures 5, 7 and 8, the locking element 68 has a clamping surface 70 defining a second recess 71 such that when the pivotal cover 44 is in the locked position the surface 70 and second recess 71 engage the fitting of the cable to sandwich the fitting between the locking element 68 and the body portion 26. The clamping surface 70 has a plurality of teeth 72 for engaging the teeth on the fitting of the cable when the pivotal cover 44 is in the locked position to prevent the end of the cable from moving axially out of the cavity 28 of the core adjuster 20.

While the pivotal cover 44 in the open position (Figure 5) it is possible to move the cable back and forth inside the cavity of the adjuster to adjust the cable overshoot length. When the cable overshoot length is adjusted the cable is locked by pressing down the pivotal cover 44 (Figure 6). When this is done the special shape of the inner top part of the pivotal cover locks against the correspondingly shaped part of the cable. This specially shaped locking element in engagement with the corresponding shape of the cable makes it impossible with the cable is moved in axial direction relative to the core adjuster. Since the locking element 68 is integrated in the pivotal cover 44 it moves together with the pivotal cover so that no spring is needed to push the locking element away from the cable during insertion of the cable.

Referring to Figure 11, in the illustrated embodiment, the pivotal cover 44 includes a lever 66 disposed adjacent to the first end 46 of the pivotal cover 44 for disengaging the fingers 32, 60 from each other to allow the pivotal cover 44 to move from the locked position to the open position. Typically, a second force F2 is applied to the lever 66 for separating the end cap 57 of the pivotal cover 44 from the first end 22 of the core adjuster 20 to disengaged the second finger 60 from the first finger 32 and allow the pivotal cover 44 to move from the locked position to the open position. Alternatively, the pivotal cover 44 may define an orifice (not numbered), as shown in Figure 13, adjacent to the first end 46 of the pivotal cover 44. A tool (not shown) such as, for example a screw driver, can be inserted into the orifice to force the end cap 57 of the pivotal cover 44 to separate from the first end 22 of the core adjuster 20 for disengaging the fingers 32, 60 and allowing the pivotal cover 44 to move from the locked position to the open position. It is to be appreciated that there are various method to engage and disengage the fingers 32, 60 from each other without departing from the scope of the present invention.

While the invention has been described with reference to an exemplary embodiment, it will be understood by those skilled in the art that various changes may be made and equivalents may be substituted for elements thereof without departing from the scope of the invention as defined by the appended claims. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. Core adjuster for retaining a cable, comprising: an adjuster housing member with a cavity for receiving an end section of the cable, a locking element (68) and a pivotal cover (44) pivotably connected to the housing member and capable of pivoting between an open and a locked position in engagement with the adjuster housing member, the locking element being configured to be in securing contact with the end of the cable in the cavity when the pivotal cover (44) is in the locked position to secure the cable therein, **characterised in that** the locking element (68) is integrally formed with the pivotal cover (44).

2. Core adjuster according to claim 1, **characterised in that** the pivotal cover (44) and the locking element (68) are integrally formed from a plastic material as injection moulded part.

3. Core adjuster according to any of the preceding claims, **characterised in that** the adjuster housing member has a pair of opposing tabs (40) extending from the body portion (26) of the core adjuster and defining the pivotal axis (A) extending through each of the tabs (40), and **in that** the pivotal cover (44) has a pair of ears (52), a hole (54) being defined in each of the ears (52), each of the tabs (40) being received in a respective one of the holes (54) of the ears (52) to provide a pivotal connection of the pivotal cover (44) on the adjuster housing member.

4. Core adjuster according to claim 3, **characterised in that** the holes (54) of the ears are elongated in the axial direction in which the cable extends within the cavity to allow axial movement between the pivotal cover (44) and the adjuster housing member.

5. Core adjuster according to any of the preceding claims, the core adjuster (20) has at least one first finger (32) disposed adjacent to a first bore (30) of the adjuster housing member, the first bore (30) being arranged to permit the cable to extend therethrough into the inner cavity of the housing member, and in that the pivotal cover comprises an end cap (57) that is elastically bendable with respect to the remaining part of the pivotal cover and is extending beyond the first bore and carrying at least one second finger (60) for engaging the first finger (32) when the pivotal cover (44) is in the locked position.

6. Core adjuster according to claim 5, **characterised in that** vertically above the at least one first finger (32) a recess is provided to receive and retain the second finger (60) in an intermediate position of the pivotal cover (44) in which the locking element (68) is disengaged from the end section of the cable.

7. Core adjuster according to claim 5 or 6, **characterised in that** the at least one first finger (32) has a wedge shape such that the second finger (60) is, when the pivotal cover is moving towards the locked position, gliding on a ramp portion of the wedge of the first finger and bent away from the adjuster housing member and springing back in engagement behind a flat portion of the first finger (32) once reaching the locked position, thereby engaging the pivotal cover (44) on the adjuster housing member.

8. Core adjuster according to any of the claims 5 to 7, **characterised in that** a lever (66) is provided near the front end portion of the pivotal cover (44) which allows to exert a force on the end cap (57) to bend it away from the adjuster housing member to thereby disengage the second finger (60) from the first finger (32) to allow the pivotal cover (44) to be opened.

9. Core adjuster according to claim 8, **characterised in that** a lever (66) is connected to the front end portion of the pivotal cover (44) which allows to grip the pivotal cover and to press on the lever with the same hand.

10. Core adjuster according to any of the claims 5 to 9, **characterised in that** the lever (66) has a projecting portion extending beyond the end cap (57) of the pivotal cover in axial direction to provide leverage to exert a torque on the end cap (57) pressing it towards the locked position of the first and second fingers (32, 60).

11. Core adjuster according to any of claims 5 to 10, **characterised in that** the end cap (57) is connected to the remaining part of the pivotal cover by one or two narrow strip-shaped portions of material to reduce the amount of material that has to be deformed when bending the end cap (57) with respect to the remaining part of the pivotal cover (44).

12. Core adjuster according to claim 11, **characterised in that** the end cap (57) is connected to the remaining part of the pivotal cover (44) by two spaced apart strip-shaped portions, and that the lever (66) is disposed between the two strip-shaped portions.

## Patentansprüche

1. Kerneinstellvorrichtung zum Halten eines Seilzugs mit: einem Einstellvorrichtungsgehäuseteil mit einem Hohlraum zur Aufnahme eines Endabschnitts des Seilzugs, einem Verschlusselement (68) und einem schwenkbaren Deckel (44), der schwenkbar mit dem Gehäuseteil verbunden ist und dazu in der Lage ist, zwischen einer offenen und einer geschlossenen Position in Eingriff mit dem Einstellungsvorrichtungsgehäuseteil zu schwenken, wobei das Verschlusselement dazu ausgestaltet ist, um in fixierendem Kontakt mit dem Ende des Seilzugs in dem Hohlraum zu sein, wenn der schwenkbare Deckel (44) sich in der Verschlussposition befindet, um den Seilzug darin zu fixieren, **dadurch gekennzeichnet, dass** das Verschlusselement (68) einstückig mit dem schwenkbaren Deckel (44) ausgebildet ist.

2. Kerneinstellvorrichtung nach Anspruch 1, **dadurch gekennzeichnet, dass** der schwenkbare Deckel (44) und das Verschlusselement (68) in einem Stück aus einem Kunststoffmaterial als Spritzgussteil gebildet sind.

3. Kerneinstellvorrichtung nach einem der vorhergehenden Ansprüche, **dadurch gekennzeichnet, dass** das Einstellvorrichtungsgehäuseteil ein Paar von gegenüberliegenden Zapfen (40) hat, die von dem Körperteil (26) der Kerneinstellvorrichtung ausgehen und die die Schwenkachse (A) definieren, die durch jeden der Zapfen (40) verläuft, und dass der schwenkbare Deckel (44) ein Paar von Ösen (52) hat, wobei in jeder der Ösen (52) ein Loch (54) definiert ist, wobei jeder Zapfen (40) in einem jeweiligen der Löcher (54) der Ösen (52) aufgenommen ist, um eine Schwenkverbindung des schwenkbaren Deckels (44) an dem Einstellvorrichtungsgehäuseteil bereitzustellen.

4. Kerneinstellvorrichtung nach Anspruch 3, **dadurch gekennzeichnet, dass** die Löcher (54) der Ösen in axialer Richtung, in der der Seilzug sich in dem Hohlraum erstreckt, verlängert sind, um eine axiale Bewegung zwischen dem schwenkbaren Deckel (44) und dem Einstellvorrichtungsgehäuseteil zu ermöglichen.

5. Kerneinstellvorrichtung nach einem der vorhergehenden Ansprüche, wobei die Kerneinstellvorrichtung (20) wenigstens einen ersten Finger (32), der benachbart einer ersten Bohrung (30) des Einstellvorrichtungsgehäuseteils angeordnet ist, aufweist, wobei die erste Bohrung (30) dazu ausgestaltet ist, um es dem Seilzug zu ermöglichen, dort hindurch in den inneren Hohlraum des Gehäuseteils zu verlaufen, und wobei der schwenkbare Deckel eine Endkappe (57) hat, die in Bezug auf den verbleibenden Teil des schwenkbaren Deckels biegbar ist und bis jenseits der ersten Bohrung reicht und wenigstens einen zweiten Finger (60) trägt, um mit dem ersten Finger (32) einzugreifen, wenn der schwenkbare Deckel (44) in der geschlossenen Position ist.

6. Kerneinstellvorrichtung nach Anspruch 5, **dadurch gekennzeichnet, dass** vertikal oberhalb des wenigstens einen Fingers (32) eine Ausnehmung vorgesehen ist, um den zweiten Finger in einer Zwischenposition des schwenkbaren Deckels (44) aufzunehmen und zu halten, in der das Verschlusselement (68) außer Eingriff mit dem Endabschnitt des Seilzugs ist.

7. Kerneinstellvorrichtung nach Anspruch 5 oder 6, **dadurch gekennzeichnet, dass** der wenigstens eine erste Finger (32) eine Keilform hat, so dass der zweite Finger (60), wenn der schwenkbare Deckel sich in die geschlossene Position bewegt, auf einem Rampenbereich des Keils des ersten Fingers gleitet und von dem Einstellvorrichtungsgehäuseteil weggebogen wird und in Eingriff hinter einem ebenen Bereich des ersten Fingers (32) zurückspringt, sobald er die geschlossene Position erreicht, wodurch der schwenkbare Deckel (44) an dem Einstellvorrichtungsgehäuseteil einrastet.

8. Kerneinstellvorrichtung nach einem der Ansprüche 5 bis 7, **dadurch gekennzeichnet, dass** ein Hebel (66) nahe dem vorderen Endbereich des schwenkbaren Deckels (44) vorgesehen ist, der es ermöglicht, eine Kraft auf die Endkappe (57) auszuüben, um sie weg von dem Einstellvorrichtungsgehäuseteil zu biegen, um **dadurch** den zweiten Finger (60) außer Eingriff mit dem ersten Finger (32) zu bringen, um es zu ermöglichen, dass der schwenkbare Deckel (44) geöffnet wird.

9. Kerneinstellvorrichtung nach Anspruch 8, **dadurch gekennzeichnet, dass** ein Hebel (66) mit dem vorderen Endbereich des schwenkbaren Deckels (44) verbunden ist, was es ermöglicht, den schwenkbaren Deckel zu greifen und mit derselben Hand auf den Hebel zu drücken.

10. Kerneinstellvorrichtung nach einem der Ansprüche 5 bis 9, **dadurch gekennzeichnet, dass** der Hebel (66) einen vorstehenden Abschnitt hat, der über die Endkappe (57) des schwenkbaren Deckels in axialer Richtung hinaus steht, um einen Hebelarm bereitzustellen, um ein Drehmoment auf die Endkappe (57) auszuüben, das sie in Richtung der geschlossenen Position der ersten und zweiten Finger (32, 60) drückt.

11. Kerneinstellvorrichtung nach einem der Ansprüche 5 bis 10, **dadurch gekennzeichnet, dass** die Endkappe (57) mit dem restlichen Teil des schwenkbaren Deckels durch einen oder zwei schmale, streifenförmige Materialbereiche verbunden ist, um die Menge an Material zu reduzieren, die deformiert werden muss, wenn die Endkappe (57) in Bezug auf den übrigen Teil des schwenkbaren Deckels (44) gebogen wird.

12. Kerneinstellvorrichtung nach Anspruch 11, **dadurch gekennzeichnet, dass** die Endkappe (57) mit dem übrigen Teil des schwenkbaren Deckels (44) durch zwei beabstandete, streifenförmige Bereiche verbunden ist und dass der Hebel (66) zwischen den beiden streifenförmigen Bereichen angeordnet ist.

## Revendications

1. Ajusteur de noyau pour retenir un câble, comprenant : un élément formant boîtier d'ajusteur avec une cavité pour recevoir un tronçon terminal du câble, un élément de blocage (68) et un couvercle pivotant (44) connecté en pivotement à l'élément de boîtier et capable de pivoter entre une position ouverte et une position bloquée en engagement avec l'élément formant boîtier d'ajusteur, l'élément de blocage étant configuré pour être en contact de fixation avec l'extrémité du câble dans la cavité quand le couvercle pivotant (44) est dans la position bloquée pour fixer le câble à l'intérieur de celle-ci, **caractérisé en ce que** l'élément de blocage (68) est formé d'une seule pièce avec le couvercle pivotant (44).

2. Ajusteur de noyau selon la revendication 1, **caractérisé en ce que** le couvercle pivotant (44) et l'élément de blocage (68) sont formés d'une seule pièce en matière plastique sous forme de pièce moulée par injection.

3. Ajusteur de noyau selon l'une quelconque des revendications précédentes, **caractérisé en ce que** l'élément formant boîtier d'ajusteur comprend une paire de tétons opposés (40) s'étendant depuis la portion de corps (26) de l'ajusteur de noyau et définissant l'axe de pivotement (A) qui s'étend à travers chacun des tétons (40), et **en ce que** le couvercle pivotant (44) comprend une paire d'oreillettes (52), un trou (54) étant défini dans chacune des oreillettes (52), chacun des tétons (40) étant reçu dans un trou respectif parmi les trous (54) des oreillettes (52) pour assurer une connexion pivotante du couvercle pivotant (44) sur l'élément formant boîtier d'ajusteur.

4. Ajusteur de noyau selon la revendication 3, **caractérisé en ce que** les trous (54) des oreillettes sont allongés dans la direction axiale dans laquelle s'étend le câble à l'intérieur de la cavité pour permettre un mouvement axial entre le couvercle pivotant (44) et l'élément formant boîtier d'ajusteur.

5. Ajusteur de noyau selon l'une quelconque des revendications précédentes, dans lequel l'ajusteur de noyau (20) comprend au moins un premier doigt (32) disposé adjacent à un premier trou (30) de l'élément formant boîtier d'ajusteur, le premier trou (30) étant agencé de manière à permettre au câble de s'étendre à travers lui-même jusque dans la cavité intérieure de l'élément formant boîtier, et en ce que le couvercle pivotant comprend un capuchon d'extrémité (57) qui peut être fléchi élastiquement par rapport à la partie restante du couvercle pivotant et qui s'étend au-delà du premier trou et porte au moins un second doigt (60) pour engager le premier doigt (32) quand le couvercle pivotant (44) est dans la position bloquée.

6. Ajusteur de noyau selon la revendication 5, **caractérisé en ce qu'**un évidement est prévu verticalement au-dessus dudit au moins un premier doigt (32), pour recevoir et retenir le second doigt (60) dans une position intermédiaire du couvercle pivotant (44) dans laquelle l'élément de blocage (68) est dégagé depuis le tronçon terminal du câble.

7. Ajusteur de noyau selon la revendication 5 ou 6, **caractérisé en ce que** ledit au moins un premier doigt (32) possède une forme en coin, de telle façon que le second doigt (60) coulisse, quand le couvercle pivotant se déplace vers la position bloquée, sur une portion en rampe du coin du premier doigt et est fléchi en éloignement de l'élément formant boîtier d'ajusteur puis retourne élastiquement en engagement derrière une portion plane du premier doigt (32) une fois qu'il atteint la position bloquée, engageant ainsi le couvercle pivotant (44) sur l'élément formant boîtier d'ajusteur.

8. Ajusteur de noyau selon l'une quelconque des revendications 5 à 7, **caractérisé en ce qu'**un levier (66) est prévu à proximité de la portion d'extrémité frontale du couvercle pivotant (44), qui permet d'exercer une force sur le capuchon d'extrémité (57) pour le faire fléchir en éloignement de l'élément formant boîtier d'ajusteur et dégager ainsi le second doigt (60) depuis le premier doigt (32) et pour permettre d'ouvrir le couvercle pivotant (44).

9. Ajusteur de noyau selon la revendication 8, **caractérisé en ce qu'**un levier (66) est connecté à la portion d'extrémité frontale du couvercle pivotant (44), qui permet d'agripper le couvercle pivotant et de presser sur le levier avec la même main.

10. Ajusteur de noyau selon l'une quelconque des revendications 5 à 9, **caractérisé en ce que** le levier (66) comporte une portion en projection qui s'étend au-delà du capuchon d'extrémité (57) du couvercle pivotant en direction axiale pour assurer un effet de levier et exercer un couple sur le capuchon d'extrémité (57) en le pressant vers la position bloquée du premier et du second doigt (32, 60).

11. Ajusteur de noyau selon l'une quelconque des revendications 5 à 10, **caractérisé en ce que** le capuchon d'extrémité (57) est connecté à la partie restante du couvercle pivotant par une ou deux portions de matériau étroites en forme de rubans afin de réduire la quantité de matériau qui doit être déformé quand on fait fléchir le capuchon d'extrémité (57) par rapport à la partie restante du couvercle pivotant (44).

12. Ajusteur de noyau selon la revendication 11, **caractérisé en ce que** le capuchon d'extrémité (57) est connecté à la partie restante du couvercle pivotant (44) par deux portions espacées en forme de rubans, et **en ce que** le levier (66) est disposé entre les deux portions en forme de rubans.
